## Europäisches Patentamt

## European Patent Office

## Office européen des brevets

(19)

(11) Veröffentlichungsnummer: **0 068 227 B1**

(12) **EUROPÄISCHE PATENTSCHRIFT**

(45) Veröffentlichungstag der Patentschrift:
29.01.86

(51) Int. Cl.⁴: **E 21 D 21/00, F 16 B 13/08**

(21) Anmeldenummer: **82105112.5**

(22) Anmeldetag: **11.06.82**

(54) Ankerbolzen.

(30) Priorität: 19.06.81 DE 3124244
02.10.81 DE 3139174

(43) Veröffentlichungstag der Anmeldung:
05.01.83 Patentblatt 83/1

(45) Bekanntmachung des Hinweises auf die Patenterteilung:
29.01.86 Patentblatt 86/5

(84) Benannte Vertragsstaaten:
AT BE CH DE FR GB IT LI LU NL SE

(56) Entgegenhaltungen:
AU - A - 60 773
CA - A - 984 643
DE - A - 2 451 298
DE - A - 2 622 261
DE - A - 2 701 804
DE - A - 2 941 769
DE - B - 1 085 480
DE - C - 933 328
FR - A - 1 128 704
FR - A - 1 450 190
FR - A - 2 122 263
FR - A - 2 147 575
FR - E - 87 644
GB - A - 618 489
GB - A - 825 003
GB - A - 1 020 865
GB - A - 2 062 794
US - A - 2 879 686
US - A - 3 381 567

(73) Patentinhaber: **Upat GmbH & Co, Freiburger Strasse 9 Postfach 1320, D-7830 Emmendingen (DE)**

(72) Erfinder: **Frischmann, Albert, Am Hungerberg 14, D-7835 Teningen 2 (DE)**
Erfinder: **Sternisa, Danilo, Ing. grad., Köndringer Weg 13, D-7830 Emmendingen (DE)**
Erfinder: **Mermi, Kurt, Breitestrasse 10, D-7835 Teningen 2 (DE)**
Erfinder: **Kistner, Herbert, Am Mühlbach 10, D-7800 Freiburg-Betzenhausen (DE)**

(74) Vertreter: **Rackette, Karl, Dipl.-Phys. Dr.-Ing, Kaiser-Joseph-Strasse 179 Postfach 1310, D-7800 Freiburg (DE)**

## Beschreibung

Die Erfindung betrifft einen Ankerbolzen mit einem Anschlussteil, einem glatten Schaftabschnitt und einem Einsteckteil, durch das beim Eindrehen des Ankerbolzens in ein mit einer Mörtelpatrone gefülltes zylindrisches Bohrloch eine konische Hinterschneidung im Bohrlochtiefsten erzeugbar ist.

Ein solcher Ankerbolzen ist in der DE-A-29 41 769 beschrieben. Die konische Hinterschneidung wird bei dem bekannten Ankerbolzen durch das Zusammenwirken einer Profilierung und der Abriebkörner in der Mörtelpatrone erzeugt. Dabei führt der Ankerbolzen eine taumelnde Bewegung aus, bei der das Einsteckende mit seiner Profilierung auf einer mehr oder weniger definierten Bahn bewegt wird. Die Abriebkörner der Mörtelpatrone werden bei dem bekannten Ankerbolzen während der Eindrehbewegung streckenweise mit einer Bewegungskomponente in Umfangsrichtung erfasst und infolge ihrer Anlage am Einsteckteil an der Lochwandung der zylindrischen Vorbohrung entlang gezwängt. Die genaue Form der Hinterschneidung ergibt sich zufällig und es ist nicht ausgeschlossen, dass ein Querschnitt durch die Hinterschneidung oval statt rund ist.

Soll der bekannte Ankerbolzen zur Verankerung in der sogenannten Risszone verwendet werden, ist eine definierte Hinterschneidung wünschenswert. Insbesondere ist es vorteilhaft, wenn der Hinterschnitt kreissymmetrisch ist, da nicht vorhergesehen werden kann, in welcher Richtung die möglicherweise auftretenden Risse verlaufen werden.

Aus der AU-A-60 773 ist bereits ein Spreiz-Ankerbolzen mit einem axial verlaufenden Schlitz am Einsteckende bekannt, in den ein axial verschiebbarer Spreizkeil mit seinem verjüngten Ende hineinragt. Beim Setzen wird dieser Spreiz-Ankerbolzen in eine zylindrische Bohrung eingeschlagen, wobei durch Aufweiten des Einsteckendes eine Verpressung im Bohrlochtiefsten erfolgt. Aufgrund des dabei bewirkten Spreizdruckes ergibt sich ein Kraftschluss, durch den der bekannte Spreiz-Ankerbolzen befestigbar ist. Infolge des Spreizdruckes besteht jedoch die Gefahr, dass weiche oder spröde Materialien durch die Verpressung beschädigt oder zerstört werden.

Der Erfindung liegt die Aufgabe zugrunde, einen durch Eindrehen setzbaren Ankerbolzen zu schaffen, der es gestattet, ohne Einsatz von Abriebkörnern und ohne Verpressung des Wandmaterials eine definierte, reproduzierbare Aufweitung zu schaffen, die frei von Spreizdruck ist.

Diese Aufgabe wird erfindungsgemäss dadurch gelöst, dass im Einsteckteil an dem vom Schaftabschnitt wegweisenden Ende des Einsteckteils wenigstens zwei in radial verlaufende Ausnahmebohrungen angeordnete und sich radial gegenüberliegende sowie radial über den Umfang des Einsteckteils hinausragende Einsätze sowie ein vom Einsteckende aus axial verlaufender Schlitz vorgesehen sind, in den ein axial verschiebbarer Spreizkeil mit seinem verjüngten Ende hineinragt.

Beim Setzvorgang des Ankerbolzens unter drehend schlagender Bewegung und stetigem axialem Druck wird das Einsteckende über den im Bohrloch aufstehenden Spreizkeil geschoben. Hierbei wird das Einsteckteil des Ankerbolzens mit seinen Einsätzen gegen die Bohrlochwandung gepresst, so dass Material der Bohrlochwandung abgetragen wird und das Bohrloch aufgeweitet wird. Wenn der Spreizkeil vollständig in den Schlitz eingetrieben ist, hat der Ankerbolzen seine grösstmögliche Spreizung erreicht und den beabsichtigten Hinterschnitt erzeugt. Dadurch, dass das Abräumen des Bohrlochmaterials durch am Einsteckteil angeordnete Einsätze, die radial über dessen Umfang hinausragend angeordnet sind, erfolgt, wird eine definierte Aufweitung geschaffen, in der das Einsteckende des Ankerbolzens spreizdruckfrei durch Formschluss festgehalten wird.

Bei einem Ausführungsbeispiel der Erfindung sind die Einsätze als runde Hartmetallstifte ausgebildet, die in sich radial erstreckenden Aufnahmebohrungen eingelötet, eingeklebt oder eingepresst sind. Um ein Abziehen des Einsteckteils des bereits im Bohrloch verankerten Ankerbolzens vom Keil zu verhindern, ist es vorteilhaft, wenn die Aufnahmebohrungen sich radial durchgehend bis zum Schlitz erstrecken und die Hartmetallstifte in diesen radial verschiebbar geführt sind. Die Hartmetallstifte rutschen nach Erreichen der grösstmöglichen Spreizung in Ausnehmungen hinein, die jeweils am vorderen Ende der Keilflächen des Spreizkeils ausgebildet sind. Durch das Eingreifen der innen liegenden Enden der Hartmetallstifte wird ein Abziehen des Ankerbolzens vom Spreizkeil wirksam verhindert. Die Ausnehmungen können dabei die Gestalt von Absätzen oder von quer zu den Keilflächen verlaufenden Nuten haben.

Von besonderem Vorteil ist es, dass der Ankerbolzen gleichzeitig Befestigungsmittel und Aufweitwerkzeug für die Erzielung eines Hinterschnittes im Tiefsten eines zylindrischen Bohrloches ist, weil dadurch der Ankerbolzen nach Erzielung des Hinterschnittes nicht aus dem Bohrloch entfernt zu werden braucht.

Weitere vorteilhafte Merkmale sind Gegenstand von Unteransprüchen.

In der Zeichnung sind Ausführungsbeispiele des Gegenstandes der Erfindung dargestellt. Es zeigen:

Fig. 1 ein Ausführungsbeispiel des erfindungsgemässen Ankerbolzens im Bereich der Mündung eines Bohrloches,

Fig. 2 das Einsteckteil des Ankerbolzens nach Fig. 1 in einer vergrösserten Seitenansicht,

Fig. 3 den Ankerbolzen gemäss Fig. 1 in einem Zwischenstadium beim Einsetzen in ein Bohrloch in einer Seitenansicht teilweise im Schnitt,

Fig. 4 den Ankerbolzen gemäss Fig. 1 im eingesetzten Zustand in einer Seitenansicht, teilweise im Schnitt,

Fig. 5 das Einsteckteil eines anderen Ausführungsbeispieles des erfindungsgemässen Ankerbolzens im teilweisen Schnitt und teilweise in einer Seitenansicht, wobei links ein Zwischenstadium und rechts das Endstadium während der Erzeugung des Hinterschnitts dargestellt ist, und

Fig. 6 ein weiteres Ausführungsbeispiel des erfindungsgemässen Ankerbolzens in einer der Fig. 5 entsprechenden Darstellung.

Der insgesamt mit 1 bezeichnete Ankerbolzen besteht im wesentlichen aus einem Anschlussteil 2, einem glatten Schaftabschnitt 3 und einem Einsteckteil 4. An dem Anschlussteil 2 sind ein Aussengewinde 5 und ein axial über das Anschlussteil 2 überstehendes Mitnehmerelement 7 angeordnet, das als schraubenkopfartiger Sechskantzapfen ausgebildet ist und über einen Übergang 8 verfügt, der eine Kerbwirkungen vermeidende Neigung aufweist.

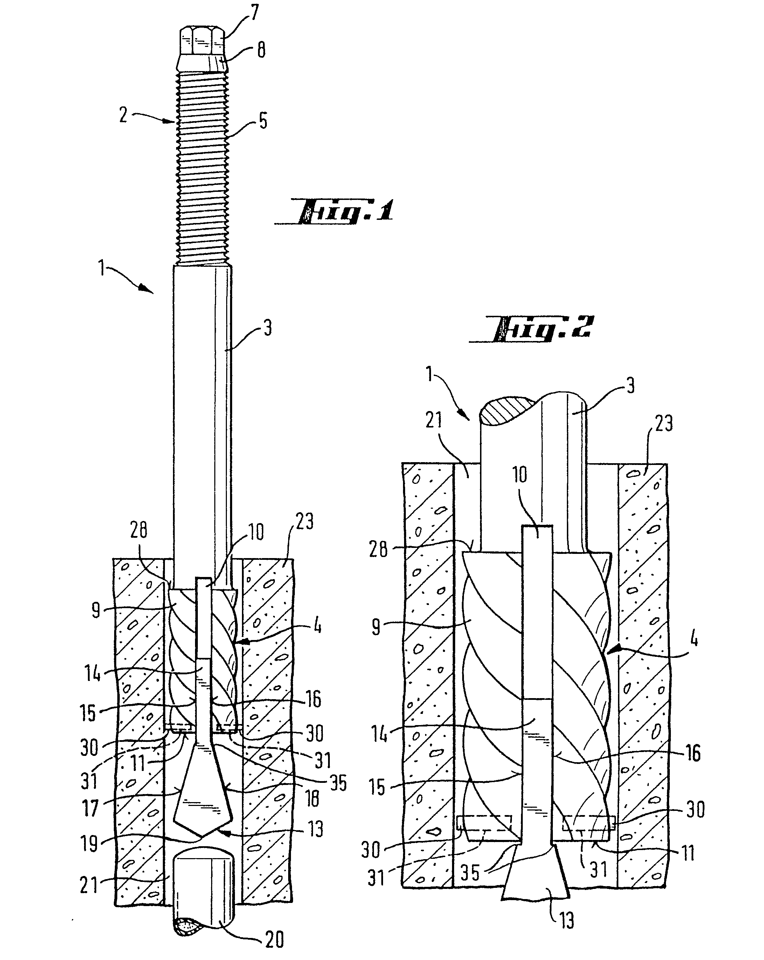

Am einsteckseitigen Ende des Ankerbolzens 1 ist das Einsteckteil 4 mit einer in Fig. 1 sichtbaren Profilierung 9 versehen, die am schaftseitigen Auslaufende eine Schulter 28 bildet. Diese Profilierung 9 kann sägezahnförmig, trapezförmig oder spitzförmig ausgebildet sein. Der Aussendurchmesser der Profilierung 9 entspricht dem Gewinde-Nenndurchmesser des Aussengewindes 5, so dass der Ankerbolzen 1 eine Durchsteckmontage gestattet.

Wie in Fig. 1 gut erkennbar ist, verfügt der Ankerbolzen 1 über einen Schlitz 10, der sich vom vorderen Ende des Ankerbolzens 1 ausgehend axial und mittig durch das Einsteckteil 4 bis in den glatten Schaftabschnitt 3 erstreckt. Der Schlitz 10 ist als Ausnehmung ausgebildet, die sich diametral durch das Einsteckteil 4 erstreckt. Die Profilierung 9 erstreckt sich mindestens über zwei Drittel der Länge des Schlitzes 10.

Die Stirnfläche 11 des Einsteckteils 4 erstreckt sich im wesentlichen im rechten Winkel zur Längsachse des Ankerbolzens 1. Ein Spreizkeil 13 ragt mit seinem Ansatz 14 in den Schlitz 10. Der Ansatz 14 hat eine Dicke, die gleich der Schlitzweite ist. Der Ansatz 14 verfügt über zwei parallel zueinander verlaufende Flächen 15, 16, die gegen die Innenseiten des Schlitzes 10 anliegen.

In Fig. 1 ist dargestellt, wie der Spreizkeil 13 im Schlitz 10 eingeklemmt werden kann, so dass der Verbraucher den Ankerbolzen 1 und den Spreizkeil 13 komplettiert erhält. Die Klemmung kann durch genaue Anpassung der Dicke des Ansatzes 14 an die lichte Weite des Schlitzes 10 erreicht werden oder auch dadurch, dass der Spreizkeil 13 ein wenig mit seinen Keilflächen 17, 18 in den Schlitz 10 eingepresst wird.

Die Keilflächen 17, 18 des Spreizkeils 13 bilden einen Keilwinkel, der beispielsweise für einen Befestigungsgrund aus Beton 2° bis 6° beträgt. Die Keilflächen 17, 18 enden an der dem Ansatz 14 gegenüberliegenden Seite in einer Dachschneide 19. Durch die Dachschneide 19 wird eine Verminderung der Reibungskräfte erzielt, wenn der Spreizkeil 13 auf dem Bohrlochgrund der in Fig. 1 dargestellten Bohrung 21 aufsitzt. Die Breite des Spreizkeils 13 ist etwas geringer als der Aussendurchmesser der Profilierung 9.

Der Ankerbolzen 1 ist aus härtbarem Stahl gefertigt, wobei er durchgehärtet sein kann oder eine harte Oberfläche mit zähelastischem Kern aufweist. Als Ausgangswerkstoff für den Spreizkeil 13 kommt vorzugsweise Stahl, einsatzgehärtet, durchgehärtet, aber auch Hartmetall oder Keramik in Betracht.

Die Gesamtlänge des Spreizkeils 13 entspricht der Länge des Schlitzes 10. Zur Verminderung der Reibungskräfte zwischen dem Ansatz 14 des Spreizkeils 13 und der Wandung des Schlitzes 10 kann der Spreizkeil 13 oder der Schlitz 10 auch mit einem Gleitmittel beschichtet sein.

Während Fig. 1 den Beginn des Einsetzvorgangs des Ankerbolzens 1 in eine Bohrung 21 zeigt, zeigt Fig. 4 den Ankerbolzen nach dem Einsetzen. Deutlich ist in Fig. 4 erkennbar, dass der Ankerbolzen 1 gleichzeitig als Befestigungsmittel und Aufweitwerkzeug für die Erzielung eines Hinterschnittes 22 im Tiefsten der zylindrischen Bohrung 21 dient.

Als Vorbereitung für den Setzvorgang wird zunächst die zylindrische Bohrung 21 in einen Befestigungsgrund 23 eingebracht. Danach wird ggf. eine Kunstharz-Mörtelpatrone 20 in die Bohrung 21 eingeschoben. Schliesslich wird der Ankerbolzen 1 zusammen mit dem im Schlitz 10 eingeklemmten Spreizkeil 13 in die Bohrung 21 unter drehend-schlagender Bewegung und stetigem axialem Druck eingeführt. Sobald die Spitze des Spreizkeils 13 den Bohrlochgrund 24 erreicht hat, wird der Einsteckteil 4 des Ankerbolzens 1 über den im Bohrloch aufstehenden Spreizkeil 13 geschoben. Hierbei wird die mit Hartmetallstiften 30 versehene Profilierung 9 des Ankerbolzens 1 gegen die Wandung der Bohrung 21 gepresst und entsprechend dem Mass des Abtrags aufgeweitet. Der Spreizkeil 13 wird so weit in den Schlitz 10 eingetrieben bis der Ansatz 14 am geschlossenen Ende des Schlitzes 10 anliegt. Ist dieser Zustand erreicht, so hat der Ankerbolzen 1 seine grösstmögliche Spreizung erreicht, den beabsichtigten Hinterschnitt 22 erzeugt und eine formschlüssige Verbindung hergestellt. Durch die Schulter 28 wird bei Einsatz einer Mörtelpatrone 20 der Verbund d.h. die Mörtelmasse 29 abgestützt, was einen geringen Anfangsschlupf bewirkt.

Wie man in Fig. 4 weiter erkennt, ist eine Durchsteckmontage möglich. Der zu befestigende Gegenstand 25 wird mit Hilfe einer Mutter 26 und einer Unterlegscheibe 27 gegen die Oberfläche des Befestigungsgrundes 23 angedrückt.

Die Profilierung 9 am Einsteckteil 4 kann, wie erwähnt, sägezahnförmig, trapezförmig, spitzförmig ausgebildet sein oder aber bei einem anderen nicht gezeigten Ausführungsbeispiel auch völlig fehlen, wenn wie unten beschrieben Hartmetallstifte 30, Keramikstifte oder sonstige geeignete Einsätze verwendet werden, wobei, falls eine Durchsteckmontage erwünscht ist, der Aussendurchmesser des glatten Einsteckteils 4 kleiner ist als der Gewinde-Nenndurchmesser des Aussengewindes 5.

Bei dem in den Figuren 1 bis 4 und insbesondere in Fig. 2 gezeigten Ausführungsbeispiel weist das Einsteckteil 4 zusätzlich zur Profilierung 9 am äusseren Ende zwei sich im rechten Winkel zum Schlitz 10 erstreckende radiale Sacklochbohrungen 31 auf, in die Hartmetallstifte 30 eingesetzt sind. Das Profil der Hartmetallstifte 30 ist vorzugsweise rund, kann jedoch beliebig sein. Als Material für die Metallstifte 30 wird Hartmetall, Keramik oder gehärteter Stahl verwendet. Die Befestigung der Hartmetallstifte 30 in den Sacklochbohrungen 31 erfolgt durch Löten, Aufkleben oder Einpressen. Der Durchmesser der Hartmetallstifte 30 ist auf den Aussendurchmesser des Ankerbolzens 1 abgestimmt, wobei die Hartmetallstifte 30 radial über den Umfang des Einsteckendes 4 bzw. der Profilierung 9 hinausragen.

Bei glatt und zylindrisch ausgebildetem Einsteckende bewirken die Hartmetallstifte 30 alleine den Materialabtrag zur Erzeugung eines Hinterschnittes 22. Sind keine Hartmetallstifte vorhanden, so übernimmt die Profilierung 9 diese Aufgabe.

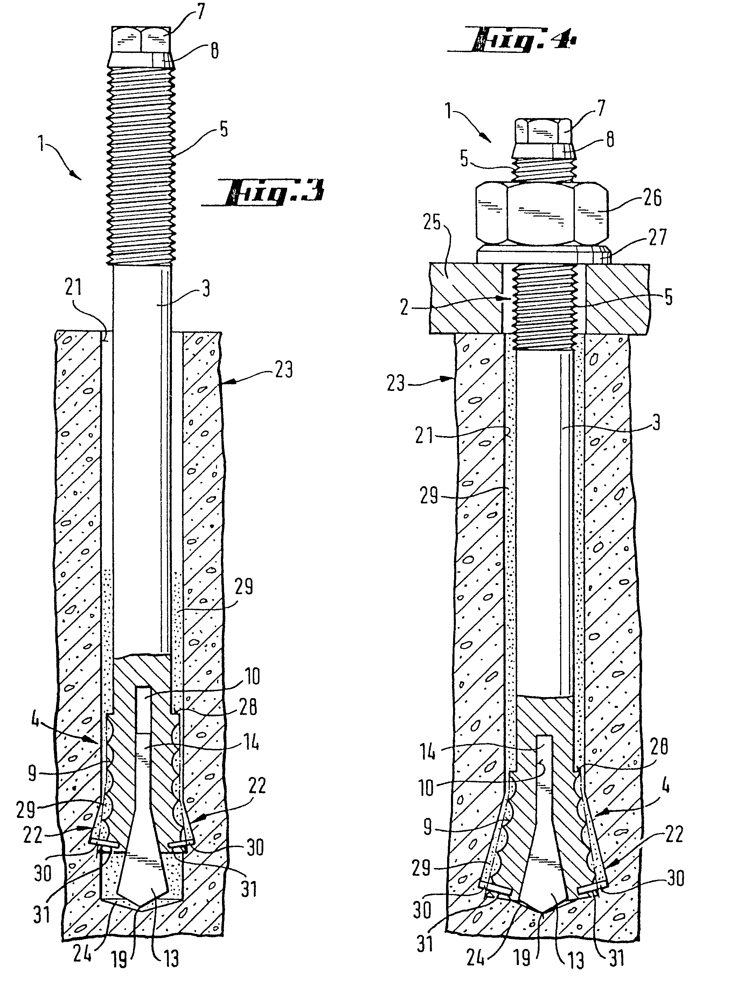

Während Fig. 1 den Beginn des Einsetzvorganges des Ankerbolzens 1 in eine Bohrung 21 zeigt, zeigt Fig. 3 den Ankerbolzen 1 während des Einsetzvorgangs und Fig. 4 den Ankerbolzen 1 nach Beendigung des Einsetzvorgangs. Wie aus den Fig. 3 und 4 hervorgeht, ist der Ankerbolzen 1 gleichzeitig Befestigungsmittel und Aufweitwerkzeug für die Erzielung eines Hinterschnittes 22 im Tiefsten der zylindrischen Bohrung 21.

Zur Verhinderung eines vorzeitigen Aufspreizens des Einsteckteiles 4 beim Zertrümmern einer Mörtelpatrone 20 sind beim Ausführungsbeispiel gemäss Fig. 1 und 2 am Ansatz 14 des Spreizkeils 13 Schultern 35 ausgebildet. Sobald die Spitze des Spreizkeils 13 den Bohrlochgrund 24 erreicht hat, wird der Einsteckteil 4 ganz über den in der Bohrung 21 aufstehenden Spreizkeils 13 geschoben. Hierbei werden je nach der Ausbildung des Einsteckteils 4 die Profilierung 9 und/oder die Hartmetallstifte 30 des Ankerbolzens 1 gegen die Wandung der Bohrung 21 gepresst und bewirken eine Aufweitung entsprechend den Massen des Materialabtrags. Der Spreizkeil 13 wird im Verlauf der Erzeugung des Hinterschnitts 22 so weit in den Schlitz 10 eingetrieben, bis der Ansatz 14 am geschlossenen Ende des Schlitzes 10 anliegt, wie in Fig. 4 dargestellt ist. Beim Erreichen dieses Zustandes hat der Ankerbolzen 1 seine grösstmögliche Spreizung erreicht, wobei der beabsichtigte Hinterschnitt 22 erzeugt ist und eine formschlüssige Verbindung hergestellt worden ist.

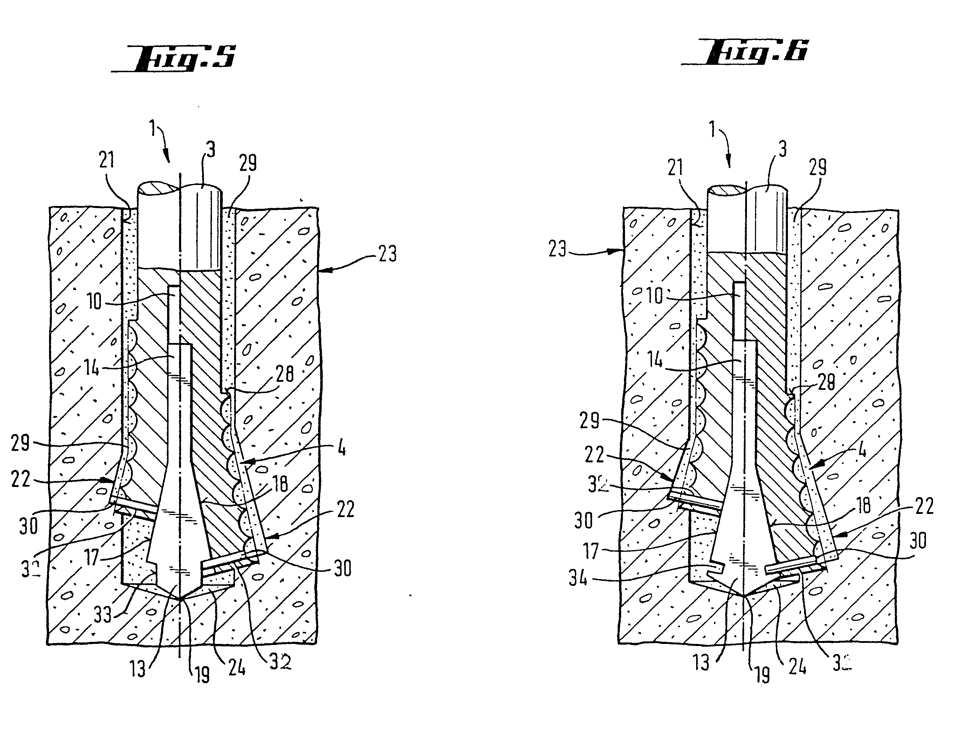

Die Fig. 5 und 6 zeigen zwei weitere Ausführungsbeispiele des Ankerbolzens 1, bei denen statt der Sacklochbohrungen 31 (Fig. 2) durchgehende Aufnahmebohrungen 32 am vorderen Ende des Einsteckteils 4 vorgesehen sind. Die Hartmetallstifte 30 sind gegenüber dem in den Fig. 1 bis 4 dargestellten Ausführungsbeispiel verlängert und können in den durchgehenden Aufnahmebohrungen 32 gleiten. Während des Aufweitvorganges liegen sie gegen die Keilflächen 17 und 18 des Spreizkeils 13 an und rutschen nach Erreichen der grösstmöglichen Spreizung in jeweils zugeordnete Ausnehmungen in der Nähe der Dachschneide 19 des Spreizkeils 13.

Bei dem in Fig. 5 dargestellten Ausführungsbeispiel sind die Ausnehmungen in Gestalt von Absätzen 33 ausgebildet. Im Ausführungsbeispiel gemäss Fig. 6 sind stattdessen Nuten 34 vorgesehen, die sich quer zur Längsachse der Keilflächen 17 und 18 des Spreizkeils 13 erstrecken und eine Breite haben, die ausreichend für ein Einrasten der innenliegenden Enden der Hartmetallstifte 30 ist.

Durch diese Massnahmen wird verhindert, dass das Einsteckteil 4 des bereits im Bohrloch verankerten Ankerbolzens 1 vom Spreizkeil 13 abgezogen werden kann. Über die in den Absätzen 33 bzw. den Nuten 34 eingerasteten Hartmetallstifte 30 wird bei einem axialen Zug in Keilrichtung des Spreizkeils 13 eine Mitnahme des Spreizkeils 13 sichergestellt, so dass es nicht möglich ist, den aufgeweiteten Einsteckteil 4 vom Spreizkeil 13 abzuziehen und durch die in Auszugsrichtung enger werdende Bohrung wieder zusammenzudrücken.

Das bevorzugte Einsatzgebiet der erfindungsgemässen Ankerbolzen 1 ist eine Verankerung in der sogenannten Risszone. Der Verlauf von Rissen in einem Befestigungsgrund ist unberechenbar und es besteht somit die Gefahr, dass solche Risse quer durch eine Befestigungsbohrung laufen und deren Durchmesser vergrössern. Bei dem erfindungsgemässen Ankerbolzen 1 ist durch die Hinterschneidung oder Hintergreifung im Bohrlochtiefsten noch genügend Resthaltekraft vorhanden, um den Ankerbolzen 1 trotz einer möglichen Lockerung in der Bohrung 21 am Herausfallen zu hindern, wenn ein Riss unmittelbar durch die Bohrung 21 verläuft.

**Patentansprüche**

1. Ankerbolzen (1) mit einem Anschlussteil (2), einem glatten Schaftabschnitt (3) und einem Einsteckteil (4), durch das beim Eindrehen des Ankerbolzens (1) in ein mit einer Mörtelpatrone (20) füllbares zylindrisches Bohrloch (21) eine konische Hinterschneidung (22) im Bohrlochtiefsten erzeugbar ist, dadurch gekennzeichnet, dass im Einsteckteil (4) an dem vom Schaftabschnitt (3) wegweisenden Ende des Einsteckteils wenigstens zwei in radial verlaufende Aufnahmebohrungen (31, 32) angeordnete, sich radial gegenüberliegende sowie radial über den Umfang des Einsteckteils (4) hinausragende Einsätze (30) sowie ein vom Einsteckende aus axial verlaufender Schlitz (10) vorgesehen sind, in den ein axial verschiebbarer Spreizkeil (13) mit seinem verjüngten Ende (14) hineinragt.

2. Ankerbolzen nach Anspruch 1, dadurch gekennzeichnet, dass die Einsätze (30) Hartmetallstifte mit rundem Profil sind.

3. Ankerbolzen nach Anspruch 2, dadurch gekennzeichnet, dass die Aufnahmebohrungen Sacklochbohrungen (31) sind, in denen jeweils ein Hartmetallstift (30) befestigt ist.

4. Ankerbolzen nach Anspruch 2, dadurch gekennzeichnet, dass die Aufnahmebohrungen (32) sich radial durchgehend bis zum Schlitz (10) erstrecken und die Hartmetallstifte (30) in diesem radial verschiebbar geführt sind.

5. Ankerbolzen nach Anspruch 4, dadurch gekennzeichnet, dass der Spreizkeil (13) am vorderen Ende der Keilflächen (17, 18) jeweils eine Ausnehmung (33, 34) aufweist, deren Breite mindestens gleich dem Durchmesser der Hartmetallstifte (30) ist.

6. Ankerbolzen nach Anspruch 5, dadurch gekennzeichnet, dass die seitlichen Berandungen der Ausnehmungen (33, 34) mit den Keilflächen (17, 18) einen rechten Winkel bilden.

7. Ankerbolzen nach Anspruch 6, dadurch gekennzeichnet, dass die Ausnehmungen Absätze (33) am vorderen Ende des Spreizkeils (13) sind.

8. Ankerbolzen nach Anspruch 6, dadurch gekennzeichnet, dass die Ausnehmungen jeweils quer zu den Keilflächen (17, 18) verlaufende Nuten (34) sind.

9. Ankerbolzen nach einem der Ansprüche 1 bis 8, dadurch gekennzeichnet dass der Ansatz (14) an dem zu den Keilflächen (17, 18) weisenden Ende auf beiden Flächen (15, 16) eine Schulter (35) aufweist.

10. Ankerbolzen nach einem der vorstehenden Ansprüche, dadurch gekennzeichnet, dass der Spreizkeil (13) an seinem vom Einsteckteil (4) wegweisenden Ende eine Dachschneide (19) aufweist.

11. Ankerbolzen nach einem der vorstehenden Ansprüche, dadurch gekennzeichnet, dass das Einsteckteil (4) eine Profilierung (9) aufweist, die am schaftseitigen Auslaufende eine Schulter (28) bildet.

## Revendications

1. Boulon d'ancrage (1) comportant une section de raccordement (2), une section de tige lisse (3) et une section d'introduction (4), permettant de produir, en enfonçant en tournant le boulon d'ancrage (1) dans un trou cylindrique (21) pouvant être comblé par une cartouche (20), une contre-dépouille (22) au fond du trou, caractérisé en ce que la section d'introduction (4) comporte, à son extrémité opposée à la section de tige (3), deux insertions (30) placées dans des logements radiaux (31, 32), radialement opposées et dépassant radialement de la périphérie de la section d'introduction (4), ainsi qu'une fente axiale (10) partant de l'extrémité d'introduction, dans laquelle un coin d'élargissement (13) mobile axialement pénètre par son extrémité (14) amincie.

2. Boulon d'ancrage selon la revendication 1, caractérisé en ce que les insertions (30) sont des pointes de métal dur à profil rond.

3. Boulon d'ancrage selon la revendication 2, caractérisé en ce que les logements sont des trous borgnes (31) dans chacun desquels est fixée une pointe de métal dur (30).

4. Boulon d'ancrage selon la revendication 2, caractérisé en ce que les logements (32) s'étendent radialement de bout en bout jusqu'à la fente (10), et en ce que les pointes de métal dur (30) y sont mobiles radialement.

5. Boulon d'ancrage selon la revendication 4, caractérisé en ce que le coin d'élargissement (13) comporte, à l'extrémité antérieure de chacune de ses faces de coin (17, 18), un évidement (33, 34) dont la largeur est au moins égale au diamètre des pointes de métal dur (30).

6. Boulon d'ancrage selon la revendication 5, caractérisé en ce que les bords latéraux des évidements (33, 34) sont perpendiculaires aux faces de coin (17, 18).

7. Boulon d'ancrage selon la revendication 6, caractérisé en ce que les évidements sont des dégagements (33) situés à l'extrémité antérieure du coin d'élargissement (13).

8. Boulon d'ancrage selon la revendication 6, caractérisé en ce que les évidements sont des rainures respectives (34) perpendiculaires aux faces de coin (17, 18).

9. Boulon d'ancrage selon l'une quelconque des revendications 1 à 8, caractérisé en ce que la saillie (14) comporte un épaulement (35) sur les deux faces (15, 16) à l'extrémité située du côté des faces de coin (17, 18).

10. Boulon d'ancrage selon l'une quelconque des revendications précédentes, caractérisé en ce que le coin d'élargissement (13) comporte une arête de dièdre (19) à son extrémité opposée à la section d'introduction (4).

11. Boulon d'ancrage selon l'une quelconque des revendications précédentes, caractérisé en ce que la section d'introduction (4) présente un profilage (9) qui forme un épaulement (28) à l'extrémité terminale située du côté de la tige.

## Claims

1. A foundation bolt (1) having a connecting portion (2), a smooth shank section (3) and a plug-in portion (4) by which upon turning the foundation bolt (1) in a cylindrical borehole (21) which may be filled with a cartridge (20) of mortar, a conical undercut (22) may be produced at the bottom of the borehole, characterised in that in the plug-in portion (4) at the end of the plug-in portion pointing away from the shank section (3) at least two inserts (30) are provided, lying radially opposite one another as well as projecting radially beyond the circumference of the plug-in portion (4) and arranged in holes (31, 32) drilled running radially to receive them, as well as a slit (10) running axially from the plug-in end, into which an axially displaceable spreader wedge (13) projects by its thin end (14).

2. A foundation bolt as in Claim 1, characterised in that the inserts (30) are hard metal pins having a round profile.

3. A foundation bolt as in Claim 2, characterised in that the drilled receiving-holes are blind drilled holes (31) into each of which a hard metal pin (30) is fixed.

4. A foundation bolt as in Claim 2, characterised in that the drilled receiving-holes (32) extend radially through to the slit (10) and the hard metal pins (30) are guided to be able to shift radially in the latter.

5. A foundation bolt as in Claim 4, characterised in that the spreader wedge (13) exhibits at the front end of each wedge face (17, 18) a recess (33, 34) the width of which is at least equal to the diameter of the hard metal pins (30).

6. A foundation bolt as in Claim 5, characterised in that the lateral boundaries of the recesses (33, 34) make a right angle with the wedge faces (17, 18).

7. A foundation bolt as in Claim 6, characterised in that the recesses are shoulders (33) at the front end of the spreader wedge (13).

8. A foundation bolt as in Claim 6, characterised in that the recesses are grooves (34) running respectively transversely to the wedge faces (17, 18).

9. A foundation bolt as in one of the Claims 1 to 8, characterised in that the extension (14) at the end pointing to the wedge faces (17, 18) exhibits on both faces (15, 16) a shoulder (35).

10. A foundation bolt as in one of the preceding Claims, characterised in that the spreader wedge (13) exhibits at the end of it pointing away from the plug-in portion (4) a roof-shaped edge (19).

11. A foundation bolt as in one of the preceding Claims, characterised in that the plug-in portion (4) exhibits a profiling (9) which forms a shoulder (28) at the end where it runs out next the shank.

*Fig.1*

*Fig.2*

Fig. 3

Fig. 4

Fig.6

Fig.5